# EUROPEAN PATENT SPECIFICATION

(11) **EP 1 519 631 B1**
(45) Date of publication and mention of the grant of the patent: **22.03.2006**
(21) Application number: 03021170.0
(22) Date of filing: 23.09.2003
(51) Int. Cl.: H05B 3/86

(54) **Radiant glazing unit**
Strahlungsglaseinheit
Unité de vitrage radiant

(43) Date of publication of application: 30.03.2005
(73) Proprietor: ISOCLIMA S.p.A., 35042 Este (Padova) (IT)
(72) Inventor: Manfre, Giovanni, 37042 Caldiero (Prov. of Verona) (IT)
(74) Representative: Modiano, Micaela Nadia

(56) References cited:
- EP-A- 0 252 489
- EP-A- 0 368 707
- EP-A- 0 609 088
- US-B1- 6 476 358

## Description

The present invention relates to a radiant glazing unit particularly suitable for heating enclosed spaces, rooms, vehicle cabins, et cetera, where heating occurs by irradiation.

An enclosed space is usually heated by means of normal radiators using air convection, by means of underfloor piping, by means of ventilated hot air, et cetera.

All these kinds of system force structural and architectural constraints that often are poorly suited for modern architectures.

In particular in enclosed spaces that have large glazed areas, provided by means of structural glazing, it is not easy to place scarcely invasive or constraining heating modules.

Very often, this entails the choice of providing conventional heating systems designed to heat the entire volume of the ambient air, with considerable consumption and low yield.

This situation becomes increasingly negative as the clearances of the enclosed spaces increase, as in public enclosed spaces or offices.

The same situation occurs in any case in small enclosed spaces, such as the cabin of a vehicle.

The aim of the present invention is to provide a heating element that solves or reduces the problems of heating enclosed spaces.

Within this aim, an object of the invention is to use an existing component of the enclosed space to provide a heating element.

Another object is to provide a heating element that optimizes the yield of the absorbed energy.

Another object is to provide a heating element that does not require particular structural interventions in the enclosed space where it is to be installed, particularly if installation occurs after the construction of the enclosed space or building.

Another object is to provide a heating element that is easy to manufacture, install and operate.

This aim and these and other objects that will become better apparent hereinafter are achieved by a radiant glazing unit, of the type that comprises two glass panes, between which a heating means is interposed, characterized in that a multilayer assembly is arranged between said two glass panes and is composed of a sheet of clear plastic material that supports a sandwich, which in turn is composed of two outer films made of semiconducting material that contain a central layer of electrically conducting metallic material of variable thickness, which constitutes a large electrical resistor; a sheet made of a material that reflects infrared radiation, layers for connecting and monolithically coupling the various components of the assembly, and means for the controlled supply of electric power to the layer of metallic material being further provided.

Further characteristics and advantages of the invention will become better apparent from the following detailed description of a preferred but nonlimitative embodiment thereof, given by way of example and illustrated with the aid of the accompanying drawings, wherein:
Figure 1 is an exemplifying perspective view of a radiant glazing unit in front of which a person is placed;
Figure 2 is a view of the same situation as in Figure. 1, with a chart that plots the amount of radiation emitted by the glazing unit;
Figure 3 is a partial perspective view of a glazing unit according to the invention, illustrating within its thickness the arrangement of the layers of the materials that compose it;
Figure 4 is an exploded view of the various layers that compose the glazing unit;
Figure 5 is a schematic view of the system for supplying electric power to the electrically conducting layer of the glazing unit;
Figure 6 is a schematic view of a particular embodiment of the glazing unit according to the invention;
Figure 7 is a schematic view of another particular embodiment of the glazing unit according to the invention;
Figure 8 is a perspective view of a test chamber with walls constituted by glazing units according to the invention.

With reference to the figures, the reference numeral 10 generally designates,a glazing unit according to the invention.

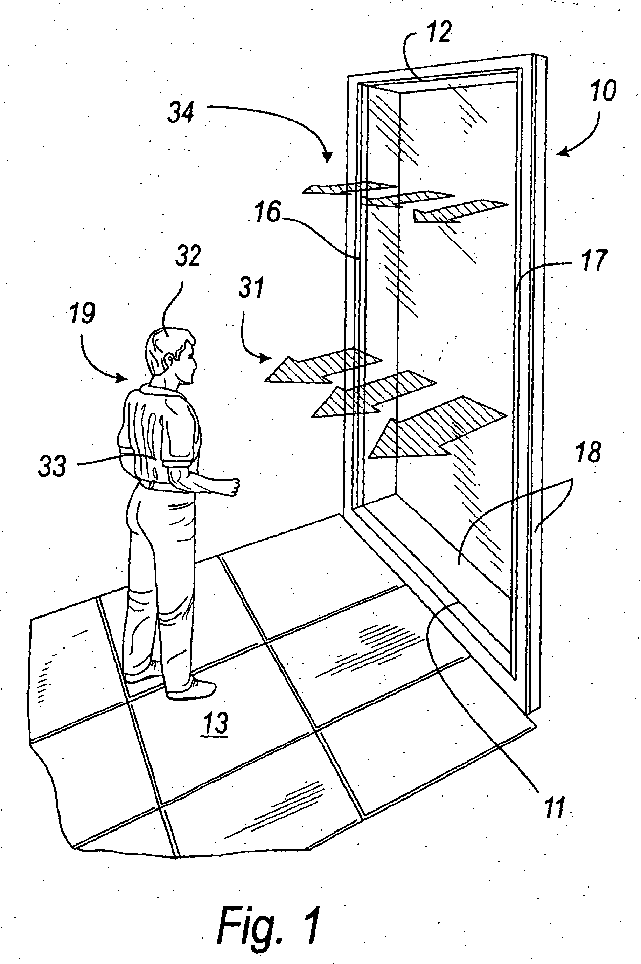

The glazing unit 10, as shown in Figures 1-5, can be a structural glazing unit, i.e. a glazing unit that forms the outside wall of a building.

Likewise, the glazing unit 10 can be the pane of a window or of a door or in any case of a structure that delimits an enclosed space when said structure is required to be also transparent or in any case not opaque to light.

In a manner that is equivalent to what has been described above, the glazing unit 10 can also be non-flat, such as for example a vehicle windshield or window.

In the illustrated case, the glazing unit 10 comprises two ends 11 and 12 that are horizontal; the first end is horizontal because it is adjacent to a floor 13 of an enclosed space 14 and the second end is horizontal because it is adjacent to a ceiling 15; the glazing unit 10 is also delimited by two vertical sides 16 and 17.

In the illustrated case, the glazing unit 10 further comprises a containment and support frame 18.

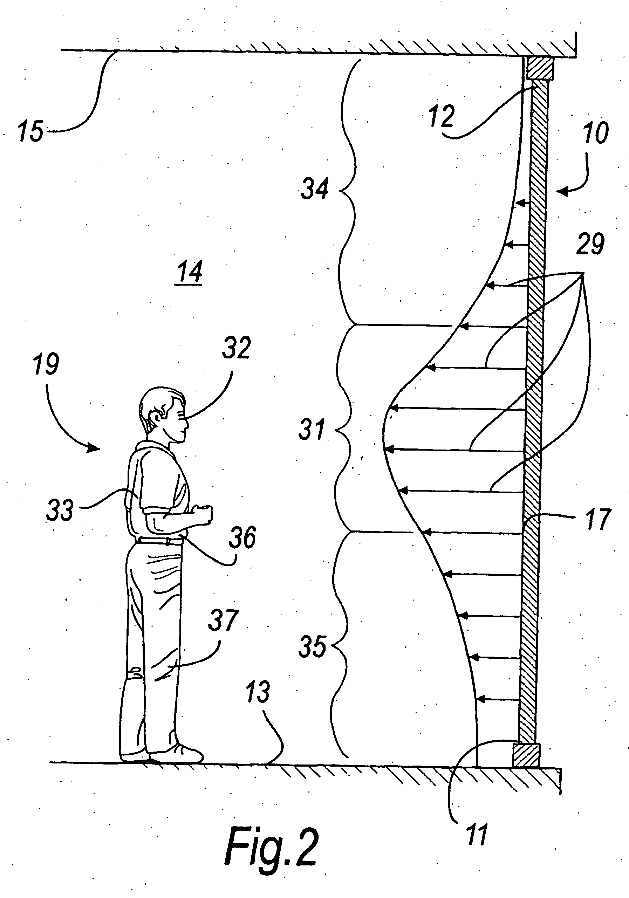

The outline of a person 19 is placed in the enclosed space 14 in Figures 1 and 2 in order to describe the thermal effect of the glazing unit 10.

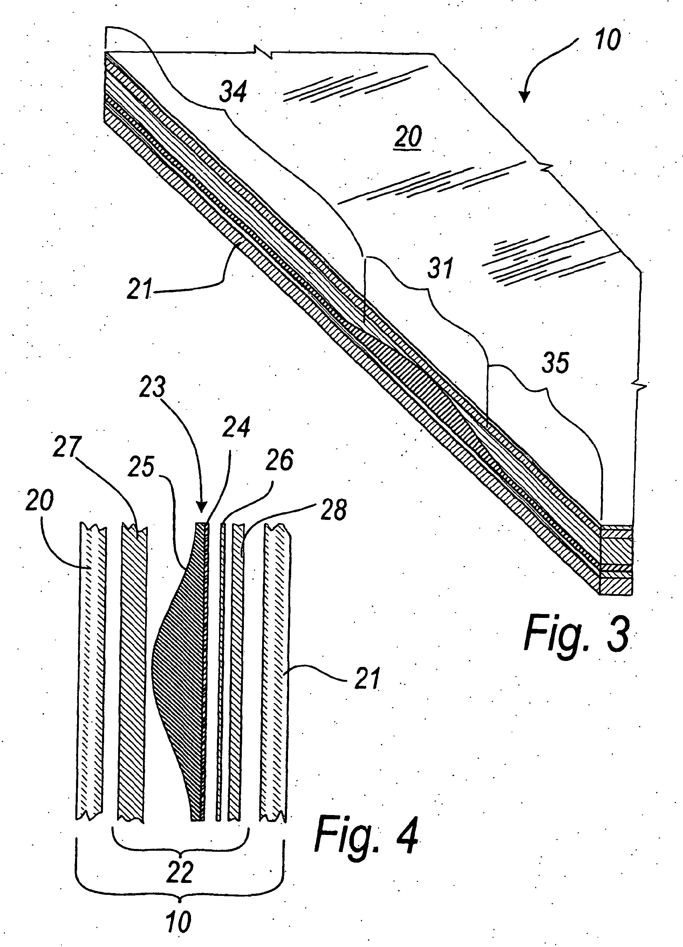

The glazing unit 10 is constituted, as shown more clearly in Figures 3 and 4, by two glass panes 20 and 21, whose thickness is chosen according to the overall dimensions of the glazing unit 10, and between which a multilayer assembly 22 is interposed.

In the illustrated case, the pane 20 faces the enclosed space 14, while the pane 21 is arranged outward.

The multilayer assembly 22 is composed of an electrically conducting element 23, which in turn is composed of a sheet of clear plastics 24, which supports a sandwich 25 composed of two outer films made of semiconducting material that contain a central layer made of metallic material, which constitutes a large electrical resistor which, as will become apparent, when supplied with electric power constitutes the element that provides heating by radiation.

The central layer made of metallic material can be made of silver, for example, and is deposited by means of one of the ordinary known methods for depositing a thin film of metallic material.

The two outer films made of semiconducting material may be provided by means of metallic oxides, oxide mixtures, doped oxides, et cetera, such as to make the entire sandwich 25 transparent to visible light.

The multilayer assembly 22 also has an infrared-reflective clear sheet 26 that is arranged adjacent to the sheet 24.

As an alternative, the infrared-reflective sheet 26 can be embedded within the conducting sandwich 25.

In another embodiment, instead of the infrared-reflective sheet 26, it is possible to provide the conducting sandwich 25 so as to integrate the infrared-reflective property in symbiosis with the electrical conduction property.

The electrically conducting element 23 and the sheet 26 are embedded between two clear sheets 27 and 28 made of polyvinyl butyral (PVB) or equivalents, which by way of known methods using heating and pressure monolithically couple all the components of the glazing unit 10.

A glazing unit 10, when the metallic layer of the sandwich 25 is supplied with current in a manner explained hereinafter, emits thermal radiation particularly on the side of the pane 20, since the radiation directed toward the pane 21 is reflected to a large extent by the sheet 26.

It is known that the feeling of well-being in relation to temperature that the person 19 perceives is linked to the radiation that affects that person's face, trunk and hands and, to a lesser extent, his abdomen and legs.

For this reason, in the solution according to the invention the sandwich 25 where the heat radiation is generated has a variable thickness and a consequent variability of the emitted radiation is achieved in relation to this variable thickness.

By way of indication, Figure 2 illustrates this situation of variable-amplitude radiation, visualized by means of vectors 29 whose length is proportional to the intensity of the emitted radiation.

The envelope of the vertices of the vectors 29 produces a chart 30 that plots vertically the emitted radiation.

By way of example, three regions respectively of maximum radiation 31 are indicated, located at a height that corresponds to the face 32 and chest 33 of the typical person 19.

Above this region 31 up to the ceiling 15 there is a reduced thickness of the sandwich 25 that produces a region 34 with low radiation emission.

Below the region 31 down to the floor 13, there is again a reduced thickness of the sandwich 25, but this thickness is in any case grater than the thickness of the region 34, accordingly forming a region 35 with medium radiation emission at the abdomen 36 and legs 37 of the person 19.

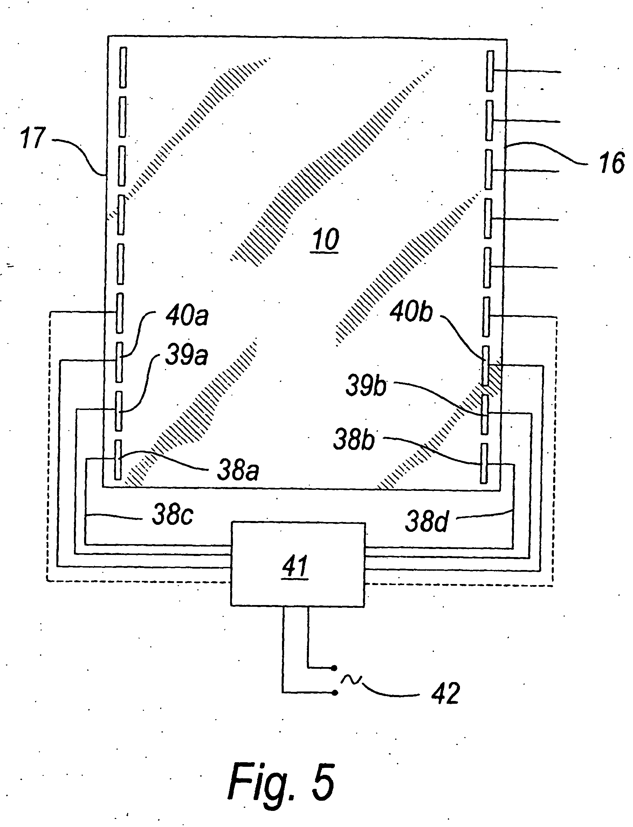

The metallic layer contained in the sandwich 25 is supplied with electric power as shown schematically in Figure 5.

Conveniently, along the sides 16 and 17 of the glazing unit 10 there are a plurality of electrodes, designated in pairs by the reference numerals 38a and 38b for the first pair, 39a and 39b for the second pair, and 40a and 40b for the third pair, while all the other pairs are not numbered but are substantially equivalent.

The pairs of corresponding electrodes lead, by means of electrical conductors designated by the reference numerals 38c and 38d for the first pair of electrodes, to a controlled power supply 41, which in turn is connected to the electrical system 42 of the building.

The electrodes that belong to the same pair, such as for example the electrodes designated by the reference numerals 38a and 38b, conveniently have the same length and the current that arrives from the power supply 41 flows in the conducting part of the sandwich 25, affecting a band that is practically equal to the breadth of the electrodes.

All the electrodes that form the individual pairs may have the same length, but in particular cases it is also possible to use electrodes that have a different length in order to concentrate or dilute the current that circulates always under the control of the power supply 41, which conveniently can be of the inverter type.

By controlling the current and voltage in each pair of electrodes and by taking into account the different resistivity in each region caused by the different thickness of the conducting layer it is possible to have different heatings and therefore different emitted radiation.

The combination of all these variables, controlled by a microprocessor-based system which can also have environmental situation sensors, allows to optimize and concentrate the emitted radiation where this is necessary, in order to achieve with the lowest possible consumption the maximum possible heating, i.e., the maximum sensation of heat.

As mentioned, not all the radiation emitted toward the pane 21 is reflected by the film 26, and therefore the entire glazing unit is also heated and this avoids the formation of condensation or misting particularly in cold periods.

In summer conditions, the film 26 reflects solar radiation outward, allowing to have the additional advantage of reducing the load on the conditioning system of the enclosed space.

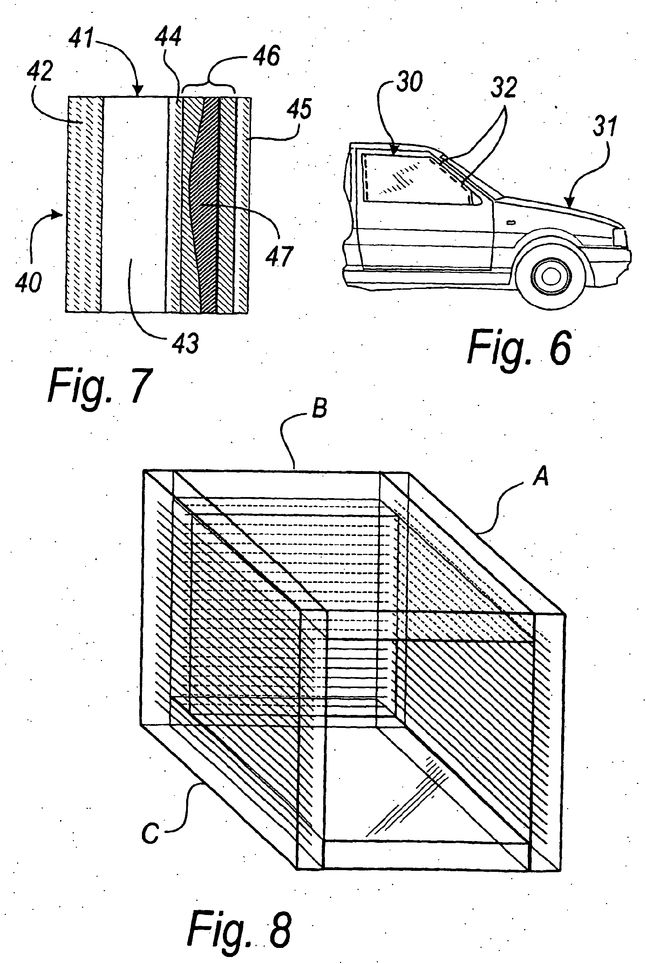

With reference to Figure 6, the glazing unit can be used as a glazing for motor vehicles, for example the front driver-side window 30 of a car 31.

The electrodes 32 are arranged on the lateral edges of the windows and are connected to the battery of the car.

The following experimental test was conducted in order to verify the feeling of well-being perceived by the driver.

Starting from an external temperature of 0 °C after an electrical heating time of approximately 6-8 minutes for the glazing unit, which had a specific resistance of 4.5 watt/dm and a power supply of 12 volts, the temperature of the cabin at the level of the steering wheel was approximately 20 °C, offering a feeling of well-being to the driver whose hands and face were directly exposed to the radiation of said window.

The initial external temperature was 0 °C.

The glazing unit that is most effective in terms of heat transmitted toward the internal environment depending on the type of layers of glass used and on the relative position of the conducting sandwich 25 with respect to said layers has been sought experimentally.

It is evident that the heat in the internal enclosed space depends mostly on reducing the flow of heat from the heating element inside the glazing unit toward the outside environment through the thickness of said glazing unit.

The experimental step has found that the maximum effective temperature difference between the inside environment and the outside environment, approximately 30°C, is achieved with a glazing unit, designated by the reference numeral 40 in Figure 7, that is constituted by a double-glazing unit 41 which has, toward the outside, a monolithic glass pane 42 of appropriate type and thickness, is centrally provided with a chamber 43 with dry air or a suitable gas, and is provided toward the inside with a multilayer glass pane as shown in the first described embodiment, i.e., first and second glass panes, designated respectively by the reference numerals 44 and 45, which contain a multilayer 46 with an embedded heating conducting sandwich 47.

A further experimental test was conducted in order to validate the invention.

This test was meant to detect the feeling of well-being perceived by a human hand during a temperature variation inside a certain enclosed space.

With reference to Figure 8, this enclosed space was simulated by providing a cube with three radiant walls A, B, C, structured according to the first embodiment of Figure 4 and lacking at the front a fourth wall in order to allow the insertion of said hand inside it.

It has been found that when bringing the walls to a temperature higher than 35°C in less than 4 minutes, starting from a situation in which the overall temperature was 0 °C, the hand perceived a feeling of well-being regardless of the external temperature and the internal temperature, which after 4 minutes was still well below 20 °C.

From what has been described and illustrated it can be noted that the intended aim and objects have been achieved and that in particular a heating element has been provided which can concentrate the emitted radiation at a level that can be chosen according to the enclosed space and to the activity performed in the enclosed space.

The solution adopted for the glazing unit can be provided by means of known technologies and allows to heat enclosed spaces of any kind with a very high yield indeed because the heat is directed where it is needed.

Naturally there may be many embodiments that start from the same inventive concept and in particular such embodiments must adapt to the enclosed spaces and/or rooms to be heated.

The materials and dimensions may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A radiant glazing unit (10), of the type that comprises two glass panes (29, 21), between which a heating means is interposed, **characterized in that** a multilayer assembly (22) is arranged between said two glass panes and is composed of a sheet of clear plastics (24) that supports a sandwich (25), which in turn is composed of two outer films made of semiconducting material that contain a central layer of electrically conducting metallic material of variable thickness, which constitutes a large electrical resistor; a sheet (26) made of a material that reflects infrared radiation, layers for connecting and monolithically coupling the various components of the assembly, and means for the controlled supply of electric power to the layer of metallic material being further provided.

2. The radiant glazing unit according to claim 1, **characterized in that** said sheet that reflects infrared radiation is arranged on the opposite side of said central layer of electrically conducting metallic material with respect to the enclosed space to be heated.

3. The radiant glazing unit according to one or more of the preceding claims, **characterized in that** said sheet made of infrared-reflective material is embedded within said sandwich.

4. The radiant glazing unit according to claim 1, **characterized in that** said sandwich reflects infrared radiation.

5. The radiant glazing unit according to one or more of the preceding claims, **characterized in that** said layers for connecting and monolithically coupling the various components of the assembly comprise two additional clear sheets of plastic material that incorporate said sandwich and said sheet that supports said sandwich.

6. The radiant glazing unit according to one or more of the preceding claims, **characterized in that** said means for the controlled supply of electric power to the layer of metallic material comprise a plurality of pairs of electrodes arranged along mutually opposite sides of said glazing unit, said pairs of electrodes being connected, by means of electrical conductors, to a controlled power supply.

7. The radiant glazing unit according to one or more of the preceding claims, **characterized in that** said electrical power supply means further comprise one or more environmental situation sensors.

8. The radiant glazing unit according to claim 6, **characterized in that** the electrodes that belong to a same pair have a same length and that the electric current that arrives from said power supply flows through said central layer of electrically conducting metallic material, affecting a band that is substantially equal to the breadth of said electrodes.

9. The radiant glazing unit according to claim 6, **characterized in that** said power supply is of the inverter type.

10. The radiant glazing unit according to one or more of the preceding claims, **characterized in that** said variable thickness of said central layer of electrically conducting metallic material is greater in the regions of said glazing unit from which it is necessary to emit more thermal radiation toward the enclosed space to be heated.

11. The radiant glazing unit according to one or more of the preceding claims, **characterized in that** it constitutes a structural glazing that forms an outer wall of a building.

12. The radiant glazing unit according to claim 11, **characterized in that** said variable thickness of said central layer made of electrically conducting metallic material is greater in the intermediate region of said glazing unit, which corresponds to the portion that acts as a source of heat radiation that affects substantially the face and chest of a person.

13. The radiant glazing unit according to claim 12, **characterized in that** in the part above said intermediate region, said thickness of said central layer of electrically conducting metallic material is lower than the thickness of said intermediate region, producing a region with low thermal radiation emission, and **in that** in the part below said intermediate region, said thickness has dimensions that are comprised between the thicknesses of said upper part and said intermediate part of said glazing unit, forming a region with medium thermal radiation emission.

14. The radiant glazing unit according to one or more of the preceding claims, **characterized in that** it comprises a monolithic glass pane, arranged on the side of said glazing unit that corresponds to the outside environment, and forming an insulated chamber that contains fluid, which is interposed between said glazing unit and said monolithic glass pane.

15. The radiant glazing unit according to one or more of claims 1 to 10, **characterized in that** it constitutes a glazing for cabins of motor vehicles.

## Revendications

1. Unité de vitrage radiant (10), du type qui comprend deux panneaux de verre (20, 21), entre lesquels sont disposés des moyens de chauffage,
**caractérisée en ce qu'**un ensemble à plusieurs couches (22) est agencé entre lesdits deux panneaux de verre et est composé d'une feuille de matière plastique transparente (24) qui supporte un sandwich (25), qui à son tour est composé de deux films externes réalisés en un matériau semiconducteur qui contient une couche centrale en un matériau métallique électriquement conducteur d'épaisseur variable, qui constitue une grande résistance électrique ; une feuille (26) réalisée en un matériau qui réfléchit le rayonnement infrarouge, des couches pour relier et assembler de façon monolithique les différents composants de l'ensemble, et des moyens pour l'alimentation électrique commandée vers la couche en matériau métallique étant de plus prévus.

2. Unité de vitrage radiant selon la revendication 1,
**caractérisée en ce que** ladite feuille qui réfléchit le rayonnement infrarouge est agencée sur le côté opposé de ladite couche centrale en matériau métallique électriquement conducteur par rapport à l'espace clos à chauffer.

3. Unité de vitrage radiant selon une ou plusieurs des revendications précédentes,
**caractérisée en ce que** ladite feuille réalisée en un matériau réfléchissant l'infrarouge est noyée dans ledit sandwich.

4. Unité de vitrage radiant selon la revendication 1,
**caractérisée en ce que** ledit sandwich réfléchit le rayonnement infrarouge.

5. Unité de vitrage radiant selon une ou plusieurs des revendications précédentes,
**caractérisée en ce que** lesdites couches pour relier et assembler monolithiquement les différents composants de l'ensemble comprennent deux couches transparentes additionnelles de matière plastique qui incorporent ledit sandwich et ladite feuille qui supporte ledit sandwich.

6. Unité de vitrage radiant selon une ou plusieurs des revendications précédentes,
**caractérisée en ce que** lesdits moyens pour l'alimentation en courant électrique commandée de la couche en matériau métallique comprennent une pluralité de paires d'électrodes agencées le long de côtés mutuellement opposés de ladite unité de vitrage, lesdites paires d'électrodes étant raccordées, par l'intermédiaire de conducteurs électriques, à une alimentation en courant électrique commandée.

7. Unité de vitrage radiant selon une ou plusieurs des revendications précédentes,
**caractérisée en ce que** lesdits moyens d'alimentation en courant électrique comprennent de plus un ou plusieurs capteurs de situation environnementale.

8. Unité de vitrage radiant selon la revendication 6,
**caractérisée en ce que** les électrodes qui appartiennent à une même paire ont une même longueur et **en ce que** le courant électrique qui arrive de l'alimentation en courant traverse ladite couche centrale en matériau métallique électriquement conducteur, affectant une bande qui est sensiblement égale à la largeur desdites électrodes.

9. Unité de vitrage radiant selon la revendication 6,
**caractérisée en ce que** ladite alimentation en courant est du type inverseur.

10. Unité de vitrage radiant selon une ou plusieurs des revendications précédentes,
**caractérisée en ce que** ladite épaisseur variable de ladite couche centrale en matériau métallique électriquement conducteur est plus grande dans les zones de ladite unité de vitrage à partir desquelles il est nécessaire d'émettre plus de rayonnement thermique vers l'espace clos à chauffer.

11. Unité de vitrage radiant selon une ou plusieurs des revendications précédentes,
**caractérisée en ce qu'**elle constitue un vitrage structurel qui forme une paroi externe d'une construction.

12. Unité de vitrage radiant selon la revendication 11,
**caractérisée en ce que** ladite épaisseur variable de ladite couche centrale réalisée en matériau métallique électriquement conducteur est plus grande dans la zone intermédiaire de ladite unité de vitrage, qui correspond à la partie qui agit comme source de rayonnement thermique qui affecte sensiblement le visage et la poitrine d'une personne.

13. Unité de vitrage radiant selon la revendication 12,
**caractérisée en ce que** dans la partie au-dessus de la zone intermédiaire, ladite épaisseur de ladite couche centrale en matériau métallique électriquement conducteur est inférieure à l'épaisseur de ladite zone intermédiaire, produisant une zone avec une faible émission de rayonnement thermique, et **en ce que**, dans la partie en dessous de ladite zone intermédiaire, ladite épaisseur a des dimensions qui sont comprises entre les épaisseurs de ladite partie supérieure et de ladite partie intermédiaire de ladite unité de vitrage, formant une zone ayant une émission de rayonnement thermique moyenne.

14. Unité de vitrage radiant selon une ou plusieurs des revendications précédentes,
**caractérisée en ce qu'**elle comprend un panneau de verre monolithique, agencé sur le côté de ladite unité de vitrage qui correspond à l'environnement extérieur, et formant une chambre isolée qui contient un fluide, qui est disposé entre ladite unité de vitrage et ledit panneau de verre monolithique.

15. Unité de vitrage radiant selon une ou plusieurs des revendications 1 à 10,
**caractérisée en ce qu'**elle constitue un vitrage pour des habitacles de véhicules motorisés.

## Patentansprüche

1. Strahlungsglaseinheit (10) der Art, die zwei Glasscheiben (20, 21) umfaßt, zwischen die ein Heizmittel eingefügt ist, **dadurch gekennzeichnet, daß** eine mehrlagige Anordnung (22) zwischen den zwei Glasscheiben angeordnet ist und aus einer Platte aus klarem Kunststoff (24), die eine Schichtstruktur (25) abstützt, die wiederum aus zwei äußeren Schichten besteht, die aus halbleitendem Material bestehen, die eine mittlere Schicht aus elektrisch leitendem Metallmaterial mit variabler Dicke enthalten, die einen großen elektrischen Widerstand bildet, besteht; wobei eine Platte (26), die aus einem Material besteht, das Infrarotstrahlung reflektiert, Schichten zum Verbinden und monolithischen Koppeln der verschiedenen Komponenten der Anordnung und ein Mittel für die gesteuerte Zufuhr von elektrischer Leistung zu der Schicht aus Metallmaterial ferner vorgesehen sind.

2. Strahlungsglaseinheit nach Anspruch 1, **dadurch gekennzeichnet, daß** die Platte, die Infrarotstrahlung reflektiert, auf der entgegengesetzten Seite der mittleren Schicht des elektrisch leitenden Metallmaterials bezüglich des zu erwärmenden geschlossenen Raums angeordnet ist.

3. Strahlungsglaseinheit nach einem oder mehreren der vorangehenden Ansprüche, **dadurch gekennzeichnet, daß** die Platte, die aus Infrarot reflektierendem Material besteht, in die Schichtstruktur eingebettet ist.

4. Strahlungsglaseinheit nach Anspruch 1, **dadurch gekennzeichnet, daß** die Schichtstruktur Infrarotstrahlung reflektiert.

5. Strahlungsglaseinheit nach einem oder mehreren der vorangehenden Ansprüche, **dadurch gekennzeichnet, daß** die Schichten zum Verbinden und monolithischen Koppeln der verschiedenen Komponenten der Anordnung zwei zusätzliche klare Platten aus Kunststoffmaterial umfassen, die die Schichtstruktur und die Platte, die die Schichtstruktur abstützt, integrieren.

6. Strahlungsglaseinheit nach einem oder mehreren der vorangehenden Ansprüche, **dadurch gekennzeichnet, daß** das Mittel für die gesteuerte Zufuhr von elektrischer Leistung zur Schicht aus Metallmaterial eine Vielzahl von Paaren von Elektroden umfaßt, die entlang zueinander entgegengesetzter Seiten der Glaseinheit angeordnet sind, wobei die Paare von Elektroden mittels elektrischer Leiter mit einer gesteuerten Leistungsversorgung verbunden sind.

7. Strahlungsglaseinheit nach einem oder mehreren der vorangehenden Ansprüche, **dadurch gekennzeichnet, daß** das elektrische Leistungsversorgungsmittel ferner einen oder mehrere Umgebungssituationssensoren umfaßt.

8. Strahlungsglaseinheit nach Anspruch 6, **dadurch gekennzeichnet, daß** die Elektroden, die zu einem gleichen Paar gehören, eine gleiche Länge aufweisen, und daß der elektrische Strom, der von der Leistungsversorgung ankommt, durch die mittlere Schicht aus elektrisch leitendem Metallmaterial fließt, was ein Band beeinflußt, das im Wesentlichen gleich der Breite der Elektroden ist.

9. Strahlungsglaseinheit nach Anspruch 6, **dadurch gekennzeichnet, daß** die Leistungsversorgung vom Wechselrichtertyp ist.

10. Strahlungsglaseinheit nach einem oder mehreren der vorangehenden Ansprüche, **dadurch gekennzeichnet, daß** die variable Dicke der mittleren Schicht aus elektrisch leitendem Metallmaterial in den Bereichen der Glaseinheit, von denen es erforderlich ist, mehr - Wärmestrahlung in Richtung des zu erwärmenden geschlossenen Raums zu emittieren, größer ist.

11. Strahlungsglaseinheit nach einem oder mehreren der vorangehenden Ansprüche, **dadurch gekennzeichnet, daß** sie eine strukturelle Verglasung bildet, die eine Außenwand eines Gebäudes bildet.

12. Strahlungsglaseinheit nach Anspruch 11, **dadurch gekennzeichnet, daß** die variable Dicke der mittleren Schicht, die aus elektrisch leitendem Metallmaterial besteht, im Zwischenbereich der Glaseinheit, der dem Teil entspricht, der als Quelle für Wärmestrahlung wirkt, die das Gesicht und die Brust einer Person im Wesentlichen beeinflußt, größer ist.

13. Strahlungsglaseinheit nach Anspruch 12, **dadurch gekennzeichnet, daß** im Teil über dem Zwischenbereich die Dicke der mittleren Schicht aus elektrisch leitendem Metallmaterial geringer ist als die Dicke des Zwischenbereichs, was einen Bereich mit geringer Wärmestrahlungsemission erzeugt, und daß im Teil unter dem Zwischenbereich die Dicke Abmessungen aufweist, die zwischen den Dicken des oberen Teils und des Zwischenteils der Glaseinheit liegen, wobei ein Bereich mit mittlerer Wärmestrahlungsemission gebildet wird.

14. Strahlungsglaseinheit nach einem oder mehreren der vorangehenden Ansprüche, **dadurch gekennzeichnet, daß** sie eine monolithische Glasscheibe umfaßt, die auf der Seite der Glaseinheit angeordnet ist, die der Außenumgebung entspricht, und eine isolierte Kammer bildet, die Fluid enthält, das zwischen die Glaseinheit und die monolithische Glasscheibe eingefügt ist.

15. Strahlungsglaseinheit nach einem oder mehreren der Ansprüche 1 bis 10, **dadurch gekennzeichnet, daß** sie eine Verglasung für Kabinen von Kraftfahrzeugen bildet.
